Europäisches Patentamt

European Patent Office

Office européen des brevets

(19)

(11) **EP 1 580 411 A1**

(12) **EUROPEAN PATENT APPLICATION**

(43) Date of publication:
**28.09.2005 Bulletin 2005/39**

(51) Int Cl.⁷: **F01N 3/035**, B01D 53/94

(21) Application number: **05004446.0**

(22) Date of filing: **01.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **03.03.2004 JP 2004058799**

(71) Applicant: **Mitsubishi Fuso Truck and Bus Corporation**
**Tokyo 108-8285 (JP)**

(72) Inventors:
• **Doumeki, Reiko**
**Tokyo 108-8285 (JP)**

• **Takeda, Yoshinaka**
**Tokyo 108-8285 (JP)**
• **Hiranuma, Satoshi**
**Tokyo 108-8285 (JP)**

(74) Representative: **Böck, Bernhard**
**advotec.**
**Böck, Tappe, Kirschner**
**Patent- und Rechtsanwälte**
**Kantstrasse 40**
**97074 Würzburg (DE)**

(54) **Exhaust gas purifying apparatus**

(57)    An oxidation catalyst apparatus (12) and a particulate collecting filter (13) are provided sequentially from an upstream side in an exhaust gas passage (11) of a diesel engine (10). A ratio of the weight of Pd to a sum of the weights of Pt and Pd carried on the oxidation catalyst apparatus is satisfactory with the following inequality: $0.05 \leq Pd/(Pt + Pd) \leq 0.75$. When the rise of the temperature of the particulate collecting filter is needed, fuel is supplied into the oxidation catalyst apparatus.

EP 1 580 411 A1

**Description**

BACKGROUND OF THE INVENTION

1. Field of the invention

The present invention relates to an apparatus, which is disposed in an exhaust gas passage of a diesel engine, for purifying an exhaust gas flowing therethrough.

2. Description of the Related Art

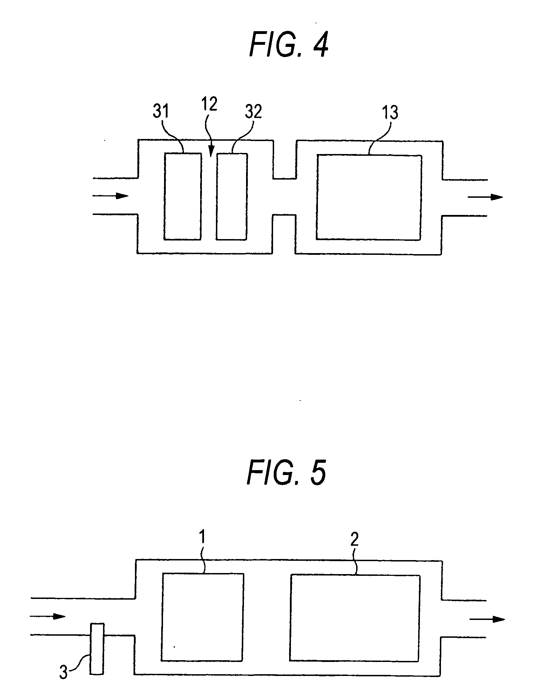

A conventional apparatus, which is disposed in an exhaust gas passage of a diesel engine, for eliminating particulates, such as soot, included in an exhaust gas flowing therethrough is provided with an upstream Pt oxidation catalyst apparatus 1 and a downstream particulate collecting filter 2, as illustrated in FIG. 5, which shows a primary part thereof.

(A) During the diesel engine works, a NO component is oxidized by a Pt oxidation catalyst of the catalyst apparatus 1 thereby to generate $NO_2$ as follows.

$$2NO + O_2 \rightarrow 2NO_2 \tag{1}$$

This $NO_2$ component oxidizes a C component contained in particulates, which are collected by the filter 2, to thereby burn the particulates as follows.

$$C \text{ (contained in the particulates)} + NO_2 \rightarrow CO + NO \tag{2}$$

Consequently, the filter 2 is continuously recovered. However, during a medium or low load operation of the diesel engine, during which an exhaust gas temperature is relatively low, it is difficult to combust and oxidize the particulates.
(B) Thus, when an amount of particulates collected in the filter 2 during the operation of the diesel engine reaches a predetermined value, fuel (HC) is supplied by an injector 3 from the upstream side of the Pt oxidation catalyst apparatus 1. Then, the fuel is burnt by utilizing exhaust heat and the Pt oxidation catalyst. Consequently, the exhaust heat is raised by heat generated as follows.

$$HC + O_2 \rightarrow CO_2 + H_2O + heat \tag{3}$$

Then, the exhaust gas is made to flow into the filter 2, at which the particulates collected therein are burnt by the heat of the exhaust gas as follows.

$$C \text{ (contained in the particulates)} + O_2 \rightarrow CO_x \tag{4}$$

Thus, the particulates are eliminated from the filter 2. Consequently, the filter 2 is forcibly recovered.

That is, although the Pt oxidation catalyst is required to have the capability to generate $NO_2$ from the NO component included in the exhaust gas and the capability to efficiently burn the fuel supplied from the injector 3, and although the fuel can efficiently be burnt in the exhaust gas, whose temperature is about 200 °C to 300 °C and relatively low, during the activity of the Pt oxidation catalyst is high, the following problems are caused with advancement of the deterioration of the Pt oxidation catalyst. That is, this burning capability is degraded. A high amount of heat needed for forcibly recovering the filter 2 cannot be ensured. An unburnt component of the fuel flows out to the downstream side of the apparatus.
However, when the engine is controlled to always raise the temperature of an exhaust gas, which flows into the exhaust gas purifying apparatus from the diesel engine, so as to ensure the sufficient fuel combustion performance thereof utilizing the Pt oxidation purifying catalyst, for example, when the fuel injection timing is shifted to a lag angle side, and when the intake air is throttled, the problem of deterioration of the fuel consumption of the diesel engine occurs (for example, JP-A-2002-35583).

In this case, Pt and Pd are used as the materials of the particulate catalyst carried on the surface of heat-resistant metal particulates of the combustion catalyst apparatus. However, this JP-A-2002-35583 does not describe the component ratio therebetween at all. Additionally, the temperature rise of the exhaust gas treatment apparatus provided at the downstream side of the catalyst, which is caused by the supply of the fuel, is not taken into consideration.

SUMMARY OF THE INVENTION

The invention aims at easily raising the temperature of an exhaust gas treatment apparatus provided at the downstream side of an oxidation catalyst apparatus, which is provided in an exhaust gas passage of an internal combustion engine, by enabling fuel, which is supplied thereto, to efficiently burn even in a relatively low temperature exhaust gas.

According to a first aspect of the invention, there is provided an exhaust gas purifying apparatus configured so that an oxidation catalyst apparatus and an exhaust gas treatment apparatus are provided sequentially from an upstream side in an exhaust gas passage of an internal combustion engine, that a ratio of the weight of Pd to a sum of the weights of Pt and Pd carried on the oxidation catalyst apparatus is satisfactory with the following formula: $0.05 \leq Pd/(Pt + Pd) \leq 0.75$, and that when the rise of the temperature of the exhaust gas treatment apparatus is needed, fuel is supplied into the oxidation catalyst apparatus.

In the exhaust gas purifying apparatus according to the invention, a ratio of the weight of Pd to a sum of the weights of Pt and Pd carried on the oxidation catalyst apparatus is set to be in the following range: $0.05 \leq Pd/(Pt + Pd) \leq 0.75$. Thus, even in a relatively low temperature exhaust gas, fuel supplied into the oxidation catalyst apparatus can efficiently be burnt by the action of a Pt oxidation catalyst and a Pd oxidation catalyst while the oxidation performance of the NO component contained in the exhaust gas due to the Pt oxidation catalyst is maintained. Consequently, the temperature of the exhaust gas treatment apparatus provided at the downstream side of the oxidation catalyst apparatus can easily be raised.

BRIEF DESCRIPTION OF THE DRAWINGS

FIG. 1 is a schematic arrangement diagram illustrating an embodiment of the invention.
FIG. 2 is an explanatory graph illustrating an operation of the embodiment.
FIG. 3 is a schematic arrangement diagram illustrating a primary part of another embodiment of the invention.
FIG. 4 is a schematic arrangement diagram illustrating a primary part of another embodiment of the invention.
FIG. 5 is a schematic arrangement diagram illustrating a primary part of a conventional apparatus.

DETAIED DESCRIPTION OF THE PREFFERED EMBODIMETNS

Hereinafter, embodiments of the invention illustrated in the accompanying drawings are described by designating equivalent parts with same reference characters therein.

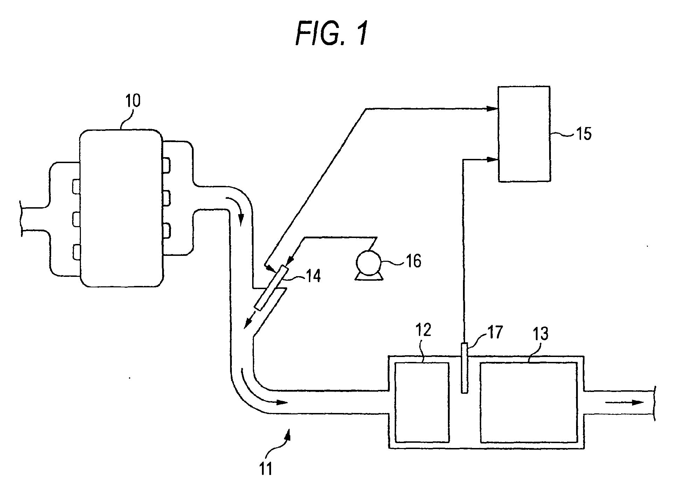

As shown in FIG. 1, an oxidation catalyst apparatus 12 and a particulate collecting filter 13 are placed sequentially from an upstream side in an exhaust gas passage 11 of a vehicle-mounted diesel engine 10. In the oxidation catalyst apparatus 12, particulate Pt and Pd are carried on the surface of a honeycomb carrier formed of cordierite by using alumina as a binder.

Further, an exhaust gas, which flows out to the exhaust gas passage 11 from the diesel engine 10 during the diesel engine 10 works, is exhausted in a clean state, which is realized by collecting and eliminating particulates such as soot included in the exhaust gas during the exhaust gas passes through the particulate collecting filter 13, toward the downstream side of the particulate collecting filter 13.

Furthermore, an injector 14 is disposed at the upstream side of the oxidation catalyst apparatus 12. When an amount of particulates collected by the particulate collecting filter 13 during the operation of the diesel engine 10 reaches a predetermined value, fuel, such as light oil, supplied from a fuel pump 16 according to an instruction outputted by an electronic control unit 15 is fed from the injector 14 into the exhaust gas passage 11 from the injector 14 after it is judged that an exhaust gas temperature detected by a temperature sensor 17 disposed between the oxidation catalyst apparatus 12 and the particulate collecting filter 13 reaches an oxidation-catalyst activating temperature.

Incidentally, in a case where it is judged that the exhaust gas temperature detected by the temperature sensor 17 does not reach the oxidation-catalyst activating temperature, an operation of controlling the engine, for example, a post-injection of fuel in an expansion stroke is performed, so that the exhaust gas temperature is made to reach the oxidation-catalyst activating temperature. Thereafter, the supply of fuel into the exhaust gas passage 11 from the injector 14 is started.

At that time, an amount of fuel supplied from the injector 14 is controlled according to the exhaust gas temperature detected by the temperature sensor 17. The temperature of the exhaust gas flowing into the particulate collecting filter 13 is adjusted to a value, which is close to, for example, 600 °C, by burning the fuel, which is directly fed from the injector 14, in the oxidation catalyst apparatus 12.

That is, when the amount of collecting particulates in the filter 13 is less than a predetermined value, so that the forcible recovery of the filter 13 is unnecessary, and when the temperature of the exhaust gas in the oxidation catalyst apparatus 12 is equal to or higher than, for instance, 250 °C, $NO_2$ is generated from the NO component in the exhaust gas, as described in the formulae (1) and (2), similarly to the case of the conventional apparatus. Thus, the particulates collected in the filter 13 are oxidized and burnt to thereby eliminate the particulates from the filter 13. Consequently, the filter 13 is continuously recovered.

Additionally, the fuel fed from the injector 14 is burnt by utilizing the heat of the exhaust gas, which is sent from the diesel engine 10, and also utilizing the Pt oxidation catalyst and the Pd oxidation catalyst in the oxidation catalyst apparatus 12, as described in the formula (3). The exhaust gas, whose temperature is further raised by the combustion heat thereof, flows into the filter 13 and causes the particulates collected in the filter 13 to burn, as described in the formula (4), thereby to eliminate the particulates from the filter 13 and to forcibly recover the filter 13.

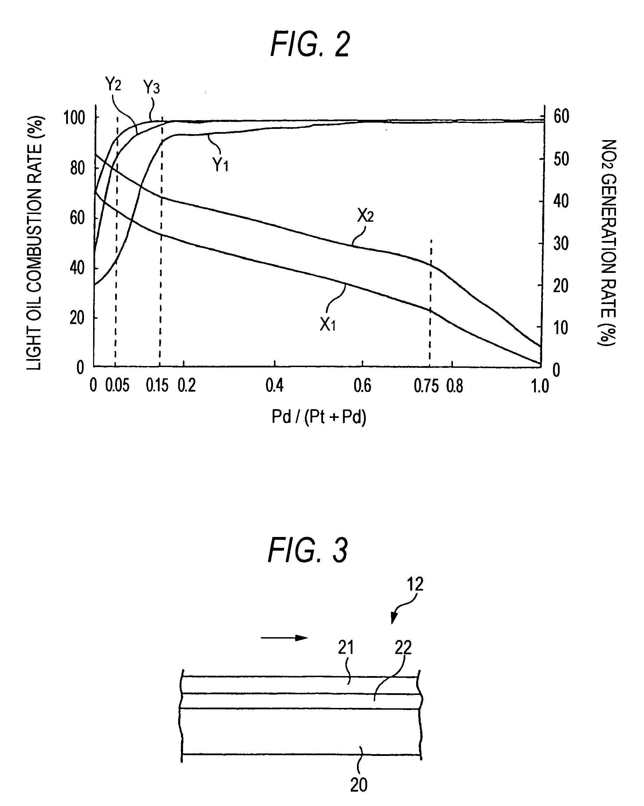

In this case, when the ratio in amount between Pt and Pd carried in the oxidation catalyst apparatus 12 is changed, a $NO_2$ generation rate, which is based on the formula (1), and a fuel (or light oil) combustion rate based on the formula (3) changed as exemplified by curves $X_1$ and $X_2$ and curves $Y_1$ to $Y_3$ illustrated in FIG. 2.

Incidentally, the curves $X_1$, $X_2$ and $Y_1$ to $Y_3$ are associated with the following cases of the exhaust gas temperature, respectively.

Curve $X_1$: Exhaust Gas Temperature is 300 °C
Curve $X_2$: Exhaust Gas Temperature is 350 °C
Curve $Y_1$: Exhaust Gas Temperature is 250 °C
Curve $Y_2$: Exhaust Gas Temperature is 275 °C
Curve $Y_3$: Exhaust Gas Temperature is 300 °C

That is, in a case where an amount of carried precious metal is constant, when the carried rate of Pd is increased, the carried rate of Pt decreases. However, when the carried rate of Pd is increased from 0 as shown in FIG. 2, the fuel combustion rate abruptly increases with increase in the carried rate of Pd, regardless of the value of the exhaust gas temperature. Thereafter, the fuel combustion rate is maintained at the high value. On the other hand, the $NO_2$ generation rate gradually decreases with increase in the carried rate of Pd, that is, decrease of Pt, regardless of the value of the exhaust gas temperature. When the carrying ratio between Pt and Pd (that is, the ratio of a weight of Pd to a sum of weights of Pd and Pt) (Pd / (Pt + Pd)) is equal to or higher than about 0.75, the declivity of each of the curves $X_1$ and $X_2$ becomes relatively large, so that the $NO_2$ generation rate is rapidly degraded.

Therefore, to efficiently raise the temperature of the exhaust gas flowing into the filter 13 and restrain the discharge of the unburnt component thereof so as to surely burn the particulates collected in the filter 13 by the heat of the exhaust gas, as described in the formula (4), and as to be able to forcibly recover the filter 13, it is necessary that at least, the carrying ratio between Pt and Pd (that is, the ratio of a weight of Pd to a sum of weights of Pd and Pt) (Pd / (Pt + Pd)) is set to be equal to or higher than 0.05. Preferably, the carrying ratio therebetween is set to be equal to or higher than 0.15 at which the fuel combustion ratio is high even when the exhaust gas temperature is about 250°C and relatively low.

Further, to confine reduction in the $NO_2$ generation rate to a relatively small value even when the carrying ratio between Pt and Pd (that is, the ratio of a weight of Pd to a sum of weights of Pd and Pt) (Pd / (Pt + Pd)) increases, that is, to prevent the $NO_2$ generation rate from starting to deteriorate, it is desirable that the carrying ratio therebetween (that is, the ratio of a weight of Pd to a sum of weights of Pd and Pt) is equal to or less than 0.75. In this case, the $NO_2$ generation rate can be confined to a range that is effective in continuously recovering the filter 13.

In a case where Pt and Pd are carried in the oxidation catalyst apparatus 12 at the aforementioned ratio as described above, the fuel combustionperformance of the oxidation catalyst apparatus 12 can be enhanced totally and eventually, as compared with the fuel combustion performance of the conventional Pt oxidation catalyst, even when the deterioration of the oxidation catalyst progresses, and even when the fuel supplied from the injector 14 includes many kinds of HC differing in components from one another. This is because of the facts that Pd and Pt respectively have good combustion performances for different kinds of HC, that Pd has the good combustion performance for unsaturated hydrocarbon and methane, and that Pt has the good combustion performance for saturated C3 and heavier hydrocarbons. Thus, even in a relatively low temperature exhaust gas atmosphere, fuel can efficiently be burnt. Consequently, even in a case where the exhaust gas temperature of the diesel engine 10 is not always held at a relatively high value, the exhaust gas temperature is raised by using the exhaust gas to thereby easily burn the fuel supplied by the injector 14. Thus, the particulates collected by the filter 13 are effectivelyburnt. Consequently, the filter 13 canbe recovered forcibly and efficiently.

Thus, the exhaust gas temperature control operations to be performed at the engine side, such as operations of shifting the fuel injection timing in the engine to a lag angle side, throttling the intake air, and throttling the exhaust air, become unnecessary. The fuel consumption of the diesel engine 10 can be restrained from being deteriorated. Moreover, precise control operations, such as an operation of controlling the rise of the temperature of the exhaust gas of the engine, are not particularly needed. Therefore, this embodiment has the advantage of easily realizing a highly safe apparatus enabled to surely achieve an exhaust gas purifying operation.

In an embodiment shown in FIG. 3, a PD oxidation catalyst layer 21 is formed on the surface of a carrier 20 of the oxidation catalyst apparatus 12 in such a way as to face a flow of the exhaust gas, which is indicated by an arrow. Also, a Pt oxidation catalyst layer 22 is formed on the carrier side 20. Thus, the Pd oxidation catalyst layer 21 and the Pt oxidation catalyst layer 22 are carried by the carrier 20 in a dualized state.

In this case, the Pd oxidation catalyst layer 21 of the double oxidation catalyst layers is formed in such a way as to face the flow of the exhaust gas. Thus, the concentration of the Pd oxidation catalyst, which has the good fuel combustion performance for the exhaust gas, becomes high. Consequently, this embodiment has the advantage of relatively highly efficiently performing the combustion of the fuel supplied from the injector at the time of forcibly recovering the filter.

Further, in an embodiment shown in FIG. 4, a Pd oxidation catalyst 31 and a Pt oxidation catalyst 32 of the oxidation catalyst apparatus 12 are sequentially disposed in series from the upstream side of a flow of the exhaust gas, which is indicated by an arrow. In this case, the concentration of the Pd oxidation catalyst 31 is high on the upstream side of the exhaust gas in the oxidation catalyst apparatus 12. Thus, this embodiment features that heat can be generated by effectively burning the fuel even in a catalyst front end portion (that is, an upstream part of the exhaust gas), in which the rise of the temperature of the exhaust gas is difficult to achieve. Furthermore, because the Pd oxidation catalyst 31, whose combustion performance is higher than that of the Pt oxidation catalyst 32, is disposed at the catalyst front end portion, HC exhausted from the engine can be burnt from a relatively low temperature state even when the exhaust gas temperature is relatively low. Consequently, an amount of HC accumulated on the oxidation catalyst can be reduced.

Consequently, the excessive rise of the temperature of the oxidation catalyst, which is caused by the ignition of HC accumulated on the oxidation catalyst due to the rise of the exhaust gas temperature at vehicle acceleration, can be prevented.

Incidentally, although the fuel is directly fed to the oxidation catalyst apparatus 12 by the injector 14 in each of the embodiments, this may be modified so that the multi-stage injection of the fuel into the combustion cylinder of the internal combustion engine, that is, what is called the post-injection is performed to thereby make the fuel to flow into the exhaust gas passage from the combustion cylinder by maintaining an unburnt state of the fuel, and that this unburnt fuel is burnt in the oxidation catalyst apparatus 12. Needless to say, this modification can obtain advantages similar to those of the aforementioned embodiments.

Further, although each of the aforementioned embodiments employs the particulate collecting apparatus as the exhaust gas treatment apparatus, the particulate collecting apparatus may be replaced with an apparatus requiring the rise of the temperature at the treatment of the exhaust gas, for example, an apparatus using $NO_x$ catalyst or oxidation catalyst.

**Claims**

**1.** An exhaust gas purifying apparatus comprising:

an oxidation catalyst apparatus and an exhaust gas treatment apparatus, which are provided sequentially from an upstream side in an exhaust gas passage of an internal combustion engine,

wherein a ratio of a weight of Pd to a sum of weights of Pt and Pd carried on said oxidation catalyst apparatus is satisfactory with a following formula:

$$0.05 \leq Pd/(Pt + Pd) \leq 0.75,$$

and

wherein when rise of a temperature of said exhaust gas treatment apparatus is needed, fuel is supplied into said oxidation catalyst apparatus.

2. The exhaust gas purifying apparatus according to claim 1, wherein the ratio is satisfactory with the following formula:

$$0.15 \leq Pd/(Pt + Pd) \leq 0.75.$$

3. The exhaust gas purifying apparatus according to claim 2, wherein a Pd oxidation catalyst layer and a Pt oxidation catalyst layer are doubly formed in said oxidation catalyst apparatus,
   wherein said Pd oxidation catalyst layer is formed to face a flow of an exhaust gas, and
   wherein said Pt oxidation catalyst layer is formed on a carrier side.

4. The exhaust gas purifying apparatus according to claim 2, wherein a Pd oxidation catalyst and a Pt oxidation catalyst are sequentially disposed in series from an upstream side of a flow of an exhaust gas in said oxidation catalyst apparatus.

5. The exhaust gas purifying apparatus according to claim 3, wherein said exhaust treatment apparatus is a particulate collecting filter.

6. The exhaust gas purifying apparatus according to claim 4, wherein said exhaust treatment apparatus is a particulate collecting filter.

7. The exhaust gas purifying apparatus according to claim 5, wherein the fuel is supplied in the internal combustion engine or directly supplied into said oxidation catalyst apparatus.

8. The exhaust gas purifying apparatus according to claim 6, wherein the fuel is supplied in the internal combustion engine or directly supplied into said oxidation catalyst apparatus.

FIG. 1

## *FIG. 2*

## *FIG. 3*

## FIG. 4

## FIG. 5

**European Patent Office**

## EUROPEAN SEARCH REPORT

Application Number

EP 05 00 4446

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 1999, no. 03, 31 March 1999 (1999-03-31) & JP 10 337476 A (TOHO GAS CO LTD), 22 December 1998 (1998-12-22) * abstract * ----- | 1 | F01N3/035 B01D53/94 |
| A | JP 2003 265955 A (NGK INSULATORS LTD) 24 September 2003 (2003-09-24) * abstract * ----- | 1 | |
| A | US 4 111 848 A (TORII ET AL) 5 September 1978 (1978-09-05) * column 5, line 64 - column 6, line 2; claims 1,2,5; figure 3 * ----- | 1 | |
| A | EP 1 123 728 A (PELLEGRINO, LUIGI) 16 August 2001 (2001-08-16) * claim 1 * ----- | 1 | |

TECHNICAL FIELDS SEARCHED (Int.Cl.7)

F01N
B01D

The present search report has been drawn up for all claims

| Place of search | Date of completion of the search | Examiner |
|---|---|---|
| Munich | 12 May 2005 | Tatus, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 580 411 A1**

### ANNEX TO THE EUROPEAN SEARCH REPORT
### ON EUROPEAN PATENT APPLICATION NO.

EP 05 00 4446

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2005

| Patent document cited in search report | | Publication date | Patent family member(s) | | Publication date |
|---|---|---|---|---|---|
| JP 10337476 | A | 22-12-1998 | NONE | | |
| JP 2003265955 | A | 24-09-2003 | NONE | | |
| US 4111848 | A | 05-09-1978 | JP | 1234155 C | 17-10-1984 |
| | | | JP | 53007591 A | 24-01-1978 |
| | | | JP | 59003216 B | 23-01-1984 |
| | | | AU | 501966 B2 | 05-07-1979 |
| | | | AU | 2587377 A | 14-12-1978 |
| | | | CA | 1077916 A1 | 20-05-1980 |
| | | | DE | 2727137 A1 | 29-12-1977 |
| | | | GB | 1530858 A | 01-11-1978 |
| EP 1123728 | A | 16-08-2001 | IT | T020000126 A1 | 08-08-2001 |
| | | | EP | 1123728 A1 | 16-08-2001 |
| | | | US | 2001011449 A1 | 09-08-2001 |

EPO FORM P0459

For more details about this annex : see Official Journal of the European Patent Office, No. 12/82